# EUROPÄISCHE PATENTANMELDUNG

(11) **EP 1 103 660 A2**
(43) Veröffentlichungstag der Anmeldung: **30.05.2001**
(21) Anmeldenummer: 00125669.2
(22) Anmeldetag: 23.11.2000
(51) Int. Cl.: E01D 19/08, E03F 5/046

(54) **Bordsteinbrückenablauf**

(30) Priorität: 24.11.1999 CZ 418999
(71) Anmelder: Vlcek, Radek, 323 33 Plzen (CZ)
(72) Erfinder: Vlcek, Radek, 323 33 Plzen (CZ)
(74) Vertreter: Jeck, Anton, Dipl.-Ing.

(57) **Zusammenfassung**

Es handelt sich um eine Bordstein-Brückenablauf mit einem Teller (3), dessen Unterteil mit einem Anschluß (15) zur Abwasserrohrleitung versehen ist. Im Oberteil in der Öffnung des mit Isolation (4) versehenen Tellers (3) ist ein Topf (2) angeordnet, in welchen ein Rahmen (1) eingesetzt ist. Im Rahmen (1) ist auf einer geteilten Auflagefläche (10) in Einlaufrahmen (6) aufgelegt. Auf einer Auflagefläche (11) des Einlaufrahmens ist ein Deckel (7) auf solche Weise eingesetzt, dass er zwischen angrenzenden Bordwänden (12) des Einlaufrahmens (6) liegt. In der Stirnwand des Einlaufrahmens (6) befinden sich zwei Öffnungen (13) mit einem vom Oberrand ausgehenden Anschlag (8). Die Öffnungen 13 für den Einlauf sind durch eine Rippe (9) getrennt. Die Stirnwand des Einlaufrahmens (6) kann so abgeschrägt sein, dass sie und die Vertikalachse einen spitzen Winkel bilden.

## Beschreibung

### Erfindungsgebiet

Die Erfindung betrifft einen Bordstein-Brückenablauf, der im Unterteil an ein Abfallsystem angeschlossen ist.

### Bisheriger Stand der Technik

Die Fahrbahnentwässerung auf einer Brücke wird bisher durch Brückenablaufeinsatz im Fahrdamm gelöst.

Keine andere Art der Brückenentwässerung ist bisher bekannt, bei der der Ablauf außerhalb der Fahrbahn untergebracht wäre, z. B. im Gehweg.

Von Nachteil ist, dass jeder Brückenablauf durch den Verkehr auf der Fahrbahn belastet wird. Diese Tatsache verursacht Schwierigkeiten bei Fahrbahnreparaturen und auch bei der Reinigung des Brückenablaufs.

Eine niedrige Aufnahmefähigkeit des Brückenablaufs, die zu einem Überlauf von Platzregenwasser außerhalb des Kanalisationssystems führen kann, ist ein weiterer Nachteil.

Bei den bisher benutzten Brückenablauftypen ist die Anpassung der Gehweghöhe an die Fahrbahn nicht bautechnisch gelöst worden.

### Zusammenfassung der Erfindung

Die Aufgabe der Erfindung besteht darin, einen Bordstein-Brückenablauf der im Oberbegriff des Anspruchs 1 genannten Art zu schaffen, der nicht von Fahrzeugen belastet wird, nicht bei Fahrbahnreparaturen stört, gut zu reinigen ist und eine große Aufnahmefähigkeit bei der Aufnahme von Abwasser aufweist.

Diese Aufgabe wird mit den Merkmalen des Anspruchs 1 gelöst.

Die Gehfläche ist rutschhemmend ausgebildet. Die Stirnwand des Einlaufrahmens ist so abgeschrägt, dass sie mit der Vertikalachse einen spitzen Winkel bildet.

Die Erfindung verbindet die Vorteile des Bordsteinaufsatzes und des Brückenablaufes. Die Konstruktion ermöglicht es, den Einlauf des den Bordstein entlang fließenden Wassers zu erhöhen und zugleich das Eindringen von unerwünschten Gegenständen in den Ablauf zu verhindern. Vorzugsweise wird eine max. Abmessung von 80 mm verwendet, weil diese Abmessung von den Anforderungen für den Kinderaufenthalt bestimmte Räume abgeleitet worden ist.

Die Einlaufrahmenhöhe ist vorzugsweise gleich der Bordsteinhöhe gemacht, am besten gleich der Tritthöhe, d.h. 150 mm.

### Kurzfassung der Zeichnungen

Die Erfindung wird anhand eines Ausführungsbeispiels näher erläutert. Es zeigen:
- Fig. 1: eine Stirnansicht eines Bordstein-Brückenablaufs gemäß der Erfindung, teilweise geschnitten,
- Fig. 2: ein Seitenschnitt des Bordstein-Brückenablaufs der Fig. 1 und

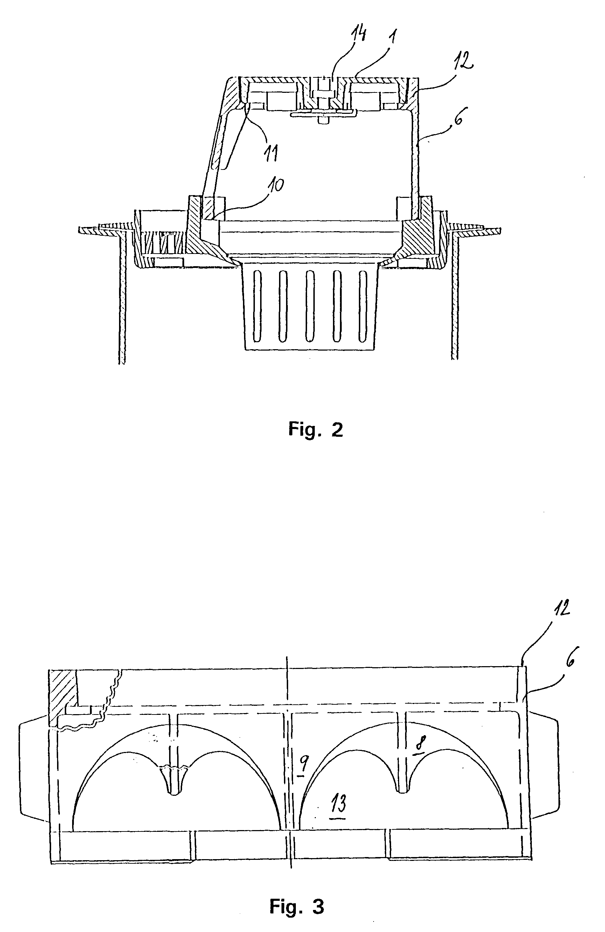

- Fig. 3: eine Stirnansicht des beim Bordstein-Brückenablauf der Figuren 1 und 2 verwendeten Einlaufrahmens mit dessen Einlauföffnungen.

### Ausführungsbeispiel

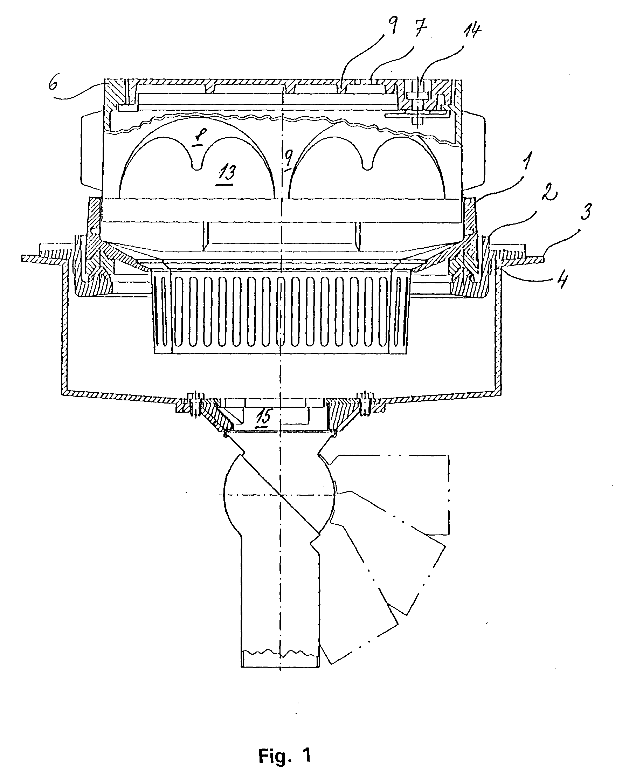

Der in den Figuren dargestellte Bordstein-Brückenablauf ist aus Gußeisen hergestellt. Er besteht aus einem Teller 3, in dessen Unterteil sich ein Anschluß 15 zur Abwasserrohrleitung über ein Abflussgelenk befindet, wie es aus Fig. 1 ersichtlich ist. Im Oberteil, in der Öffnung des Tellers 3, ist ein Topf 2 angeordnet, in dem ein Rahmen 1 eingesetzt ist. Die Öffnung des Tellers 3 ist mit einer Isolation 4 versehen. Im Rahmen 1 ist ein Einlaufrahmen 6 eingesetzt. Eine geteilte Auflagefläche 10, auf der der Einlaufrahmen 6 untergebracht ist, ist lediglich in den Ecken des Rahmens 1 gebildet.

Auf einer Auflagefläche 11 des Einlaufrahmens 6 ist ein rechteckiger Deckel 7 auf solche Weise angebracht, dass er zwischen den angrenzenden Seitenwänden 12 des Einlaufrahmens 6 plaziert ist. Die Gehfläche des Deckels 7 ist rutschhemmend ausgebildet. In der Stirnwand des Einlaufrahmens sind zwei halbkreisförmige Öffnungen 13 vorgesehen und durch eine Rippe 9 abgetrennt. Am Oberrand jeder Öffnung 13 ist ein Anschlag 8 gebildet. Der Durchmesser der Öffnungen ist in diesem Fall gleich 80 mm. Die Stirnwand des Einlaufrahmens 6 ist so abgeschrägt, dass sie mit der Vertikalachse einen Winkel von 11° bildet, wie es aus Fig. 2 ersichtlich ist. Der Deckel 7 ist durch eine Verriegelung 14 gesichert.

### Verwendbarkeit in der Industrie

Die Erfindung kann im Bauwesen verwendet werde, vorzugsweise auf allen historischen oder schmalen Brücken und überall dort, wo ein Interesse daran besteht, das Eindringen größerer Gegenstände, z.B. eines Kinderspielballs in die Kanalisation zu verhindern.

### Verzeichnis der Referenzzeichen

- 1: Rahmen
- 2: Topf
- 3: Teller
- 4: Isolation
- 6: Einlaufrahmen
- 7: Deckel
- 8: Anschlag
- 9: Rippe
- 10: geteilte Auflagefläche
- 11: Auflagefläche
- 12: angrenzende Bordwand
- 13: Öffnung
- 14: Verriegelung
- 15: Anschluß

## Patentansprüche

1. Bordstein-Brückenablauf mit einem Teller (3), in dessen Unterteil ein Anschluß (15) zur Abwasserrohrleitung und in dessen Oberteil in der mit einer Isolation (4) versehenen Öffnung des Tellers (3) ein Topf (2) angeordnet ist, in dem ein Rahmen (1) eingesetzt ist, dadurch gekennzeichnet, dass im Rahmen (1) auf einer geteilten Auflagefläche (10) ein Einlaufrahmen (6) eingesetzt ist, in dessen Oberteil auf einer Anlagefläche (11) ein Deckel 7 auf solche Weise plaziert ist,
dass er zwischen angrenzenden Bordwänden (12) des Einlaufrahmens (6) liegt, wobei der Deckel (7) mit Rippen (9) versehen ist,
dass ferner in der Stirnwand des Einlaufrahmens (6) Öffnungen (13) vorgesehen sind, in deren Oberrand ein Anschlag (8) gebildet ist, und
dass die Öffnungen (13) für den Wassereinlauf durch eine Rippe abgetrennt sind.

2. Bordstein-Brückenablauf nach Anspruch 1,
dadurch gekennzeichnet,
dass die Gehfläche des Deckels (7) rutschhemmend ausgebildet ist.

3. Bordstein-Brückenablauf nach Ansprüchen 1 und 2,
dadurch gekennzeichnet,
dass die Stirnwand des Einlaufrahmens (6) auf solche Weise abgeschrägt ist,
dass sie und die Vertikalachse einen spitzen Winkel bilden.
